# EUROPEAN PATENT SPECIFICATION

(11) **EP 1 604 286 B1**
(45) Date of publication and mention of the grant of the patent: **03.11.2010**
(21) Application number: 04714406.8
(22) Date of filing: 25.02.2004
(51) Int. Cl.: G06F 12/08

(54) **DATA PROCESSING SYSTEM WITH CACHE OPTIMISED FOR PROCESSING DATAFLOW APPLICATIONS**
DATENVERARBEITUNGSSYSTEM MIT EINEM FÜR DIE VERARBEITUNG VON DATENFLUSSANWENDUNGEN OPTIMIERTEN CACHE
SYSTÈME DE TRAITEMENT DE DONNÉES A MÉMOIRE CACHE OPTIMISÉE POUR LE TRAITEMENT D'APPLICATIONS IMPLIQUANT DES FLOTS DE DONNÉES

(30) Priority: 06.03.2003 EP 03100555
(43) Date of publication of application: 14.12.2005
(73) Proprietor: NXP B.V., 5656 AG Eindhoven (NL)
(72) Inventor: VAN EIJNDHOVEN, Josephus, T., J., NL-5656 AA Eindhoven (NL); RUTTEN, Martijn, J., NL-5656 AA Eindhoven (NL); POL, Evert-Jan, D., NL-5656 AA Eindhoven (NL)
(74) Representative: Schouten, Marcus Maria
(86) International application number: PCT/IB2004/050150
(87) International publication number: WO 2004/079488

(56) References cited:
- US-B1- 6 487 643
- RUTTEN M J ET AL: "Eclipse: heterogeneous multiprocessor architecture for flexible media processing" PARALLEL AND DISTRIBUTED PROCESSING SYMPOSIUM., PROCEEDINGS INTERNATIONAL, IPDPS 2002, ABSTRACTS AND CD-ROM FT. LAUDERDALE, FL, USA 15-19 APRIL 2002, LOS ALAMITOS, CA, USA,IEEE COMPUT. SOC, US, 15 April 2002 (2002-04-15), pages 130-137, XP010591169 ISBN: 0-7695-1573-8

## Description

The invention relates to a data processing system optimised for processing dataflow applications with tasks and data streams, a semiconductor device for use in a data processing environment optimised for processing dataflow applications with tasks and data streams and a method for indexing a cache memory in a data processing environment optimised for processing dataflow applications with tasks and data streams.

The design efforts for data processing systems especially equipped for data flow application like high-definition digital TV, set-top boxes with time-shift functionality, 3D games, video conferencing, MPEG-4 applications, and the like has increased during recent years due to an increasing demand for such applications.

In stream processing, successive operations on a stream of data are performed by different processors. For example a first stream might consist of pixel values of an image, that are processed by a first processor to produce a second stream of blocks of DCT (Discrete Cosine Transformation) coefficients of 8x8 blocks of pixels. A second processor might process the blocks of DCT coefficients to produce a stream of blocks of selected and compressed coefficients for each block of DCT coefficients.

In order to realise data stream processing a number of processors are provided, each capable of performing a particular operation repeatedly, each time using data from a next data object from a stream of data objects and/or producing a next data object in such a stream. The streams pass from one processor to another, so that the stream produced by a first processor can be processed by a second processor and so on. One mechanism of passing data from a first to a second processor is by writing the data blocks produced by the first processor into the memory. The data streams in the network are buffered. Each buffer is realised as a FIFO, with precisely one writer and one or more readers. Due to this buffering, the writer and readers do not need to mutually synchronize individual read and write actions on the channel. Typical data processing system include a mix of fully programmable processors as well as application specific subsystems dedicated to single application respectively.

An example of such an architecture is shown in Rutten et al. "Eclipse: A Heterogeneous Multiprocessor Architecture for Flexible Media Processing", IEEE Design and Test of Computers: Embedded Systems, pp. 39 - 50, July - August 2002. The required task is mapped on a particular programmable processors or one of the dedicated processors. The dedicated processors are implemented by coprocessors, which are only weakly programmable. Each coprocessor can execute multiple tasks from a single Kahn network or from multiple network on a time-shared basis. The streaming nature of e.g. media processing applications result in a high locality of reference, i.e. consecutive references to the memory address of neighbouring data. Furthermore, a distributed coprocessor shell is implemented between the coprocessors and the communication network, i.e. the bus and the main memory. It is used to absorb many system-level problems like multitasking, stream synchronisation and data transport. Due to its distributed nature, the shells can be implemented close to the coprocessor, which it is associated to. In each shell all data required for handling the streams incident to tasks being mapped on the coprocessor associated to the shell are stored in the shell's stream table.

The shells comprise caches in order to reduce data access latency occurring when reading or writing to a memory. Data which is required to perform future processing steps are cached i.e. stored in a smaller memory, which is separate from the main memory and is arranged closed to a processor using the stored data. In other words a cache is used as an intermediate storage facility. By reducing the memory access latency the processing speed of a processor can be increased. If data words are merely to be accessed by the processor from its cache rather than from the main memory, the average access time and the number of main memory accesses will be significantly reduced.

The stream buffers implemented in shared memory compete for shared resources like cache lines and the limited number of banks to store address tags. Since the tasks of the coprocessors are Input/Output intensive, an efficient cache behaviour is required to avoid contention of cache resources, which could lead to task execution delays. Document US 6 487 643 B1 discloses a multinode system where requests that a node may send and receive may contain fields such as a stream identification and a destination identification. This identification information is not used for accessing a cache.

It is therefore an object of the invention to reduce the occurrence of cache contention in an environment optimised for processing dataflow applications, where different streams compete for shared cache resources.

This object is solved by a semiconductor device according to claim 1 and a method for indexing a cache memory in a data processing environment optimised for processing dataflow applications according to claim 10.

The invention is based on the idea to reserve non-overlapping cache locations for each data stream. Therefore, stream information, which is unique to each stream, is used to index the cache memory. Here, this stream information is represented by the stream identification.

In particular, a data processing system optimised for processing dataflow applications with tasks and data streams, where different streams compete for shared cache resources is provided. An unambiguous stream identification is associated to each of said data stream. Said data processing system comprises at least one processor 12 for processing streaming data, at least one cache memory 200 having a plurality of cache blocks, wherein one of said cache memories 200 is associated to each of said processors 12, and at least one cache controller 300 for controlling said cache memory 200, wherein one of said cache controllers 300 is associated to each of said cache memories 200. Said cache controller 300 comprises selecting means 350 for selecting locations for storing elements of a data stream in said cache memory 200 in accordance to said stream identification stream_id. Therefore, the caching of data from different streams is effectively decoupled.

According to an aspect of the invention, said selecting means 350 comprises a subset determining means 352 for selecting a set of cache blocks from within said row of cache blocks in said cache memory 200 in accordance with a subset of an Input/Output address of said stream.

According to a further aspect of the invention said selecting means 350 comprises a hashing function means 351 for performing a hashing function on said stream identification stream_id to a number which is smaller than the number of cache rows.

According to a further aspect of the invention said hashing function means 351 is adapted for performing is a modulo operation. By sharing the available cache rows over different tasks the cache memories 200 can be embodied smaller thereby limiting the cost of cache memory in the overall system.

According to further aspect of the invention said selecting means 350 selects locations for a data stream in said cache memory 200 in accordance to a task identification task_id and/or a port identification port_id associated to said data stream.

The invention also relates to a semiconductor device for use in a data processing environment optimised for processing dataflow applications with tasks and data streams, where different tasks compete for shared cache resources, wherein an unambiguous stream identification stream_id is associated to each of said data stream. Said device comprises a cache memory 200 having a plurality of cache blocks, and a cache controller 300 for controlling said cache memory 200, wherein said cache controller 300 is associated to said cache memory 200. Said cache controller 300 comprises selecting means 350 for selecting locations for storing elements of a data stream in said cache memory 200 in accordance to said stream identification stream_id.

Moreover, the invention further relates to a method for indexing a cache memory 200 in a data processing environment optimised for processing dataflow applications with tasks and data streams, where different streams compete for shared cache resources. Said cache memory 200 comprises a plurality of cache blocks. An unambiguous stream identification stream_id is associated to each of said data stream. Locations for storing elements of a data stream in said cache memory 200 are selected in accordance to said stream identification stream_id to distinguish a smaller number of subsets in said cache memory than the potential number of different stream_ids.

Further aspects of the invention are described in the dependent claims.

These and other aspects of the invention are described in more detail with reference to the drawings, the figures showing:
Fig. 1 a schematic block diagram of an architecture of a stream based processing system according to the invention,
Fig. 2 a block diagram of a cache controller according to the invention, and
Fig. 3 a conceptual view of the cache organisation according to a second embodiment of the invention.

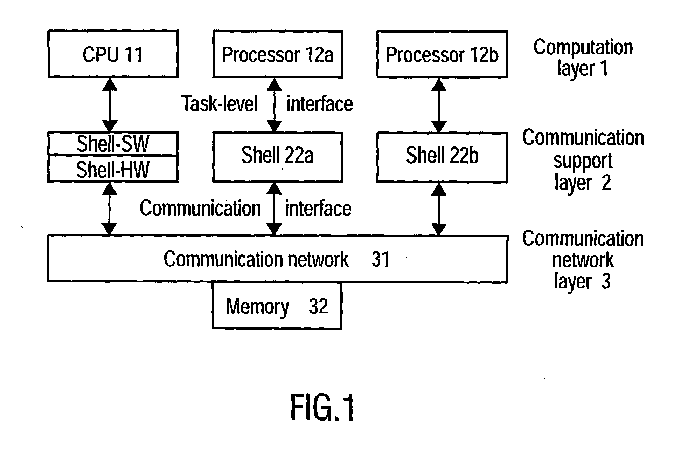

Fig. 1 shows a processing system for processing streams of data objects according to a preferred embodiment of the invention. The system can be divided into different layers, namely a computation layer 1, a communication support layer 2 and a communication network layer 3. The computation layer 1 includes a CPU 11, and two processors or processors 12a, 12b. This is merely by way of example, obviously more processors may be included into the system. The communication support layer 2 comprises a shell 21 associated to the CPU 11 and shells 22a, 22b associated to the processors 12a, 12b, respectively. The communication network layer 3 comprises a communication network 31 and a memory 32.

The processors 12a, 12b are preferably dedicated processor; each being specialised to perform a limited range of stream processing function. Each processor is arranged to apply the same processing operation repeatedly to successive data objects of a stream. The processors 12a, 12b may each perform a different task or function, e.g. variable length decoding, run-length decoding, motion compensation, image scaling or performing a DCT transformation. In operation each processor 12a, 12b executes operations on one or more data streams. The operations may involve e.g. receiving a stream and generating another stream or receiving a stream without generating a new stream or generating a stream without receiving a stream or modifying a received stream. The processors 12a, 12b are able to process data streams generated by other processors 12b, 12a or by the CPU 11 or even streams that have generated themselves. A stream comprises a succession of data objects which are transferred from and to the processors 12a, 12b via said memory 32.

The shells 22a, 22b comprise a first interface towards the communication network layer being a communication layer. This layer is uniform or generic for all the shells. Furthermore the shells 22a, 22b comprise a second interface towards the processor 12a, 12b to which the shells 22a, 22b are associated to, respectively. The second interface is a task-level interface and is customised towards the associated processor 12a, 12b in order to be able to handle the specific needs of said processor 12a, 12b. Accordingly, the shells 22a, 22b have a processor-specific interface as the second interface but the overall architecture of the shells is generic and uniform for all processors in order to facilitate the re-use of the shells in the overall system architecture, while allowing the parameterisation and adoption for specific applications.

The shell 22a, 22b comprise a reading/writing unit for data transport, a synchronisation unit and a task switching unit. These three units communicate with the associated processor on a master/slave basis, wherein the processor acts as master. Accordingly, the respective three unit are initialised by a request from the processor. Preferably, the communication between the processor and the three units is implemented by a request-acknowledge handshake mechanism in order to hand over argument values and wait for the requested values to return. Therefore the communication is blocking, i.e. the respective thread of control waits for their completion.

The shells 22a, 22b are distributed, such that each can be implemented close to the processor 12a, 12b that it is associated to. Each shell locally contains the configuration data for the streams which are incident with tasks mapped on its processor, and locally implements all the control logic to properly handle this data. Accordingly, a local stream table may be implemented in the shells 22a, 22b that contains a row of fields for each stream, or in other words, for each access point.

Furthermore, the shells 22 comprise a data cache for data transport, i.e. read operation and write operations, between the processors 12 and the communication network 31 and the memory 32. The implementation of a data cache in the shells 22 provide a transparent translation of data bus widths, a resolvement of alignment restrictions on the global interconnect, i.e. the communication network 31, and a reduction of the number of I/O operations on the global interconnect.

Preferably, the shells 22 comprise the cache in the read and write interfaces, however these caches are invisible from the application functionality point of view. The caches a play an important role in the decoupling the processor read and write ports from the global interconnect of the communication network 3. These caches have the major influence on the system performance regarding speed, power and area.

For more detail on the architecture according to Fig. 1 please refer to Rutten et al. "Eclipse: A Heterogeneous Multiprocessor Architecture for Flexible Media Processing", IEEE Design and Test of Computers: Embedded Systems, pp. 39 - 50, July - August 2002.

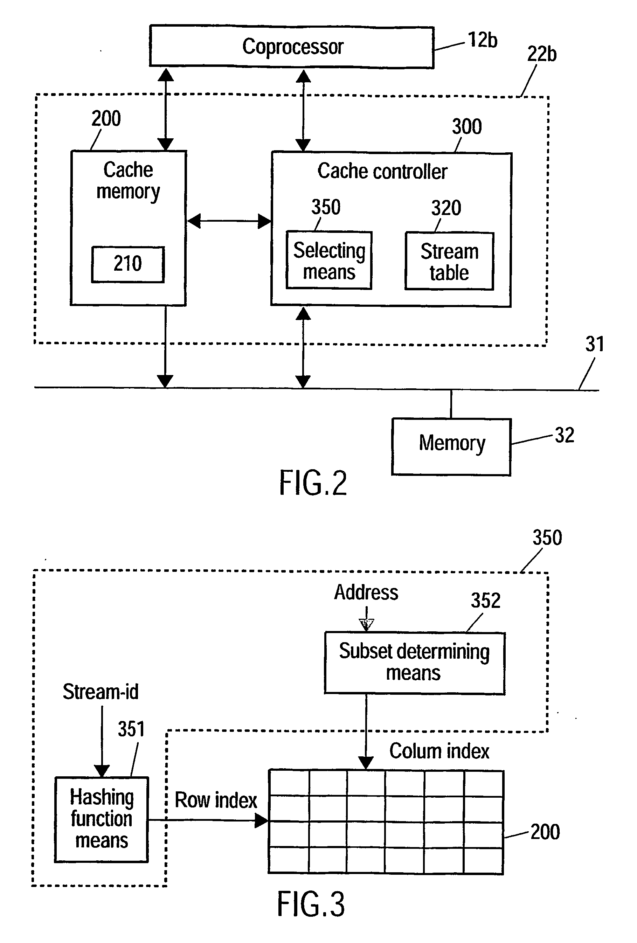

Fig. 2 shows a part of the architecture according to Fig. 1. In particular, a processor 12b, the shell 22b, the bus 31 and the memory 32 are shown. The shell 22b comprises a cache memory 200 and a cache controller 300 as part of its data transport unit. The cache controller 300 comprises a stream table 320 and a selecting means 350. The cache memory 200 may be divided into different cache blocks 210.

When a read or write operation, i.e. an I/O access, is performed by a task on the coprocessor 12b it supplies a task_id and a port_id parameter next to an address indicating from or for which particular task and port it is requesting data. The address denotes a location in a stream buffer in shared memory. The stream table 320 contains rows of fields for each stream and access points. In particular, the stream table is indexed with a stream identifier stream_id, which is derived from the task identifier task_id, indicating the task which is currently processed, and a port identifier port_id, indicating the port for which the data is received. The port_id has a local scope for each task.

The first embodiment of the invention is directed to addressing by means of indexing involving a direct address decoding, wherein an entry is determined directly from the decoding. Therefore, said selecting means 350 uses the stream identifier stream_id to select a row of cache blocks in said cache memory 200. A particular cache block from within the selected cache row is indexed through the lower bits of said address supplied by the coprocessor, i.e. the I/O address. Alternatively, the upper bits of the address may be used for indexing. The organisation of the cache memory 200 according to this embodiment is done on a direct-mapped basis, i.e. every combination of a stream identifier and an address can only be mapped to a single cache location. Accordingly, the number of cache blocks in a row is restricted to the power of two. In other words, as a column is selected by decoding a number of address bits, this will always expand to a power-of-2 number of columns.

Fig. 3 shows a conceptual view of the cache organisation according to a second embodiment of the invention, wherein this cache organisation is done on a direct-mapped basis. The selecting means from Fig. 2 comprises a hashing function means 351 and a subset determining means 352. The stream_id is input to said hashing function means 351, while the I/0 address is input to said subset determining means 352. Preferably, the hashing function means 351 performs a modulo operation over the number of cache rows, in order to translate the stream identifier stream_id to a smaller number of cache rows of said cache memory. The subset determining means 352 determines a particular cache column of said cache memory through the lower bits of said address supplied by the coprocessor, i.e. the I/O address. Alternatively, the upper bits of the address may be used for indexing. According to the cache row determined by the hashing function means 351 and the cache column determined by said subset determining means 352, a particular cache block can be indexed. An actual data word may be located by means of tag matching on the address.

As an alternative, the port identifier port_id instead of the stream identifier stream_id may be used as input of the hashing function means 351, wherein the hashing function, i.e. a modulo operation over the number of cache rows is performed on the port identifier port_id to render the port_id into a smaller number of cache rows in order to select a cache row. This has the advantage, that by sharing the available cache rows over different tasks the cache memories 200 in the shells 22 can be embodied smaller thereby limiting the cost of cache memory in the overall system. Accordingly, a task may share a cache rows with several task ports. However, this may be beneficial and cost-effective for cases where all data is read from one task port, while only sporadically reading some data from a second task port. Therefore, the hardware cost for a cache row for each task port can be reduced.

In an further alternative, the task identifier task_id is used as input to the hashing function means 351, in order to select a cache row.

Although the principles of the invention have been described with regards to the architecture according to Fig. 1, it is apparent, that the cache indexing scheme according to the invention can be extended to a more general set-associate cache organisation, where the stream_id selects a cache row and the lower bits of the address select a set of cache blocks, while the actual data is further located through tag matching on the address.

## Claims

1. Semiconductor device for use in a data processing environment optimized for processing dataflow applications with tasks and data streams, where different streams compete for shared cache resources, wherein an unambiguous stream identification (stream_id) is associated to each of said data streams, comprising:
- a cache memory (200) having a plurality of cache blocks, and
- a cache controller (300) for controlling said cache memory (200), wherein said cache controller (300) is associated to said cache memory (200);
**characterised in that** said cache controller (300) comprises:
- selecting means (350) for selecting locations for storing elements of a data stream in said cache memory (200) in accordance with said stream identification (stream_id).

2. Device according to claim 1, wherein said selecting means (350) is adapted for selecting a subset of cache blocks in said cache memory (200) in accordance with said stream identification (stream_id).

3. Device according to claim 2, wherein said selecting means (350) comprises a subset determining means (352) for selecting a set of cache blocks from within said subset of cache blocks in said cache memory (200) in accordance with a subset of an input/output address of said stream.

4. Device according to claim 3, wherein said subset determining means (352) is adapted for selecting a cache block in accordance with the lower bits of said input/output address of said stream.

5. Device according to claim 3, wherein said subset determining means (352) is adapted for selecting a cache block from within said set of cache blocks by tag matching on a subset of the input/output address bits.

6. Device according to claim 1, wherein said selecting means (350) comprises a hashing function means (351) for performing a hashing function on said stream identification (stream_id) to a number which is smaller than the number of cache rows.

7. Device according to claim 6, wherein said hashing function means (351) is adapted for performing a modulo operation.

8. Device according to claim 1, wherein said selecting means (350) is adapted for selecting locations for elements of a data stream in said cache memory (200) in accordance to a task identification (task_id) and/or a port identification (port_id) associated to said data stream.

9. Data processing system comprising a semiconductor device according to any one of claims 1 to 8 and at least one processor (12) for processing streaming data, wherein one cache memory is associated to each of said at least one processor.

10. Method for indexing a cache memory (200) in a data processing environment optimized for processing dataflow applications with tasks and data streams, where different streams compete for shared cache resources,
- wherein said cache memory (200) comprises a plurality of cache blocks, and
- wherein an unambiguous stream identification (stream_id) is associated to each of said data streams **characterised by**,
comprising the step of:
- selecting locations for storing elements of a data stream in said cache memory (200) in accordance to said stream identification (stream_id).

## Patentansprüche

1. Halbleitergerät zur Benutzung in einer Datenverarbeitungsumgebung, welche zum Verarbeiten von Datenflussanwendungen mit Aufgaben und Datenströmung optimiert ist, wobei verschiedene Ströme im Wettbewerb nach Shared-Cache-Ressourcen stehen, wobei eine eindeutige Strom-Identifikation (stream_id) mit jedem der Datenströme assoziiert ist, wobei das Gerät aufweist:
einen Cache-Speicher (200), welcher eine Mehrzahl von Cache-Blöcken hat, und
einen Cache-Controller (300) zum Steuern des Cache-Speichers (200), wobei der Cache-Controller (300) mit dem Cache-Speicher (200) assoziiert ist;
**dadurch gekennzeichnet, dass**
der Cache-Controller (300) ein Auswahlmittel (350) zum Auswählen von Orten zum Speichern von Elementen eines Datenstroms in dem Cache-Speicher (200) in Übereinstimmung mit der Strom-Identifikation (stream_id) aufweist.

2. Gerät nach Anspruch 1, wobei das Auswahlmittel (350) zum Auswählen einer Untermenge von Cache-Blöcken in dem Cache-Speicher (200) in Übereinstimmung mit der Strom-Identifikation (stream_id) ausgebildet ist.

3. Gerät nach Anspruch 2, wobei das Auswahlmittel (350) ein Untergruppe-Bestimmungs-Mittel (352) zum Auswählen einer Gruppe von Cache-Blöcken von innerhalb der Untergruppe von Cache-Blöcken in dem Cache-Speicher (200) in Übereinstimmung mit einer Untergruppe einer Eingabe-/Ausgabeadresse des Stroms aufweist.

4. Gerät gemäß Anspruch 3, wobei das Untergruppe-Bestimmungs-Mittel (352) zum Auswählen eines Cache-Blocks in Übereinstimmung mit den niedrigeren Bits der Eingabe-/Ausgabeadresse des Stroms ausgebildet ist.

5. Gerät nach Anspruch 3, wobei das Untergruppe-Bestimmungs-Mittel (352) zum Auswählen eines Cache-Blocks von innerhalb der Gruppe von Cache-Blöcken mittels Tag-Matchings auf einer Untergruppe der Eingabe-/Ausgabeadressbits ausgebildet ist.

6. Gerät nach Anspruch 1, wobei das Auswahlmittel (350) ein Hash-Funktionsmittel (351) zum Durchführen einer Hash-Funktion auf der Stromidentifikation (stream_id) zu einer Zahl, welche kleiner ist als die Zahl von Cache-Zeilen ist, aufweist.

7. Gerät nach Anspruch 6, wobei das Hash-Funktionsmittel (351) zum Durchführen einer Modulo-Operation ausgebildet ist.

8. Gerät nach Anspruch 1, wobei das Auswahlmittel (350) zum Auswählen von Orten für Elemente eines Datenstroms in dem Cache-Speicher (200) in Übereinstimmung mit einer Aufgabe-Identifikation (task_id) und/oder einer Port-Identifikation (port_id), welche mit dem Datenstrom assoziiert ist, ausgebildet ist.

9. Datenverarbeitungssystem, welches ein Halbleitergerät gemäß einem der Ansprüche 1-8 und zumindest einen Prozessor (12) zum Verarbeiten von Stromdaten aufweist, wobei ein Cache-Speicher mit jedem des zumindest einen Prozessors assoziiert ist.

10. Verfahren zum Indexieren eines Cache-Speichers (200) in einer Datenverarbeitungsumgebung, welche zum Prozessieren von Datenflussanwendungen mit Aufgaben und Datenströmen optimiert ist, wobei verschiedene Ströme im Wettbewerb nach Shared-Cache-Ressourcen stehen, wobei der Cache-Speicher (200) eine Mehrzahl von Cache-Blöcken aufweist, und wobei eine eindeutige Stromidentifikation (stream_id) mit jedem des Datenstroms assoziiert ist, **gekennzeichnet durch** den Schritt:
Auswählen von Orten zum Speichern von Elementen eines Datenstroms in dem Cache-Speicher (200) in Übereinstimmung mit der Strom-Identifikation (stream_id).

## Revendications

1. Dispositif à semi-conducteurs pour une utilisation dans un environnement de traitement de données optimisé pour le traitement d'applications de flux de données avec des tâches et des flux de données, dans lequel les différents flux sont en concurrence pour des ressources de cache partagées, dans lequel une identification de flux non ambiguë (stream_id) est associée à chacun desdits flux de données, comprenant:
- une mémoire cache (200) ayant une pluralité de blocs de cache, et
- un contrôleur de cache (300) pour contrôler ladite mémoire cache (200), dans lequel ledit contrôleur de cache (300) est associé à ladite mémoire cache (200); **caractérisé par le fait que** ledit contrôleur de cache (300) comporte:
- des moyens de sélection (350) pour sélectionner des emplacements de stockage d'éléments de flux de données dans ladite mémoire cache (200) en fonction de ladite identification de flux (stream_id).

2. Dispositif à semi-conducteurs selon la revendication 1, dans lequel lesdits moyens de sélection (350) sont agencés de manière à sélectionner un sous-ensemble de blocs de cache dans ladite mémoire cache (200) en fonction de ladite identification de flux (stream_id).

3. Dispositif à semi-conducteurs selon la revendication 2, dans lequel lesdits moyens de sélection (350) comprennent des moyens de détermination (352) pour sélectionner un ensemble de blocs de cache dans ledit sous-ensemble des blocs de cache dans ladite mémoire cache (200) en fonction d'un sous-ensemble d'adresses d'entrée / sortie dudit flux.

4. Dispositif à semi-conducteurs selon la revendication 3, dans lequel lesdits moyens de détermination (352) sont agencés de manière à sélectionner un bloc de cache en fonction des bits de poids faible desdites adresses d'entrée / sortie dudit flux.

5. Dispositif à semi-conducteurs selon la revendication 3, dans lequel lesdits moyens de détermination (352) sont agencés de manière à sélectionner un bloc de cache parmi ledit ensemble de blocs de cache par vérification de concordance d'étiquette sur un sous-ensemble des bits adresses d'entrée / sortie

6. Dispositif à semi-conducteurs selon la revendication 1, dans lequel lesdits moyens de sélection (350) comprennent des moyens de fonction de hachage (351) pour réaliser une fonction de hachage sur ladite identification de flux (stream_id) vers un nombre qui est plus petit que le nombre de rangées de cache.

7. Dispositif à semi-conducteurs selon la revendication 6, dans lequel lesdits moyens de fonction de hachage (351) sont agencés de manière à réaliser une opération de modulo.

8. Dispositif à semi-conducteurs selon la revendication 1, dans lequel lesdits moyens de sélection (350) sont agencés de manière à sélectionner des emplacements pour des éléments d'un flux de données dans ladite mémoire cache (200) en fonction d'une identification de tâche (task_id) et / ou d'une identification de port (port_id) associées audit flux de données.

9. Système de traitement de données comprenant un dispositif à semi-conducteurs selon l'une quelconque des revendications 1 à 8 et au moins un processeur (12) pour traiter les données de flux, dans lequel une mémoire cache est associée à chacun des processeurs en nombre de un au moins.

10. Procédé d'indexation d'une mémoire cache (200) dans un environnement de traitement de données optimisé pour le traitement d'applications de flux de données avec des tâches et des flux de données, dans lequel les différents flux sont en concurrence pour des ressource de cache partagées,
- dans lequel une mémoire cache (200) comporte une pluralité de blocs de cache, et
- dans lequel une identification de flux non ambiguë (stream_id) est associée à chacun desdits flux de données,
**caractérisé par** l'étape consistant à
- sélectionner des emplacements de stockage d'éléments d'un flux de données dans ladite mémoire cache (200) en fonction de ladite identification de flux (stream_id).
